# EUROPÄISCHE PATENTSCHRIFT

(11) **EP 3 914 506 B1**
(45) Veröffentlichungstag und Bekanntmachung des Hinweises auf die Patenterteilung: **14.09.2022**
(21) Anmeldenummer: 19806135.0
(22) Anmeldetag: 13.11.2019
(51) Int. Cl.: B62K 21/04, B62K 21/08, B62K 21/18, B62K 21/20

(54) **KIPPENTKOPPELTE LENKVORRICHTUNG EINES MOTORRADES**
TILT-DECOUPLED STEERING DEVICE OF A MOTORBIKE
DISPOSITIF DE DIRECTION DE MOTOCYCLETTE, À COMPENSATION DE BASCULEMENT

(30) Priorität: 23.01.2019 DE 102019101612
(43) Veröffentlichungstag der Anmeldung: 01.12.2021
(73) Patentinhaber: Bayerische Motoren Werke Aktiengesellschaft, 80809 München (DE)
(72) Erfinder: FISCHER, Dirk, 85748 Garching (DE); FORSTER, Gerhard, 93059 Regensburg (DE)
(86) Internationale Anmeldenummer: PCT/EP2019/081181
(87) Internationale Veröffentlichungsnummer: WO 2020/151848

(56) Entgegenhaltungen:
- EP-A1- 0 507 088
- EP-B1- 0 507 088
- WO-A1-97/26178
- FR-A1- 2 744 980

## Beschreibung

Die Erfindung betrifft eine kippentkoppelte Lenkvorrichtung eines Motorrades sowie ein Motorrad mit einer solchen kippentkoppelten Lenkvorrichtung.

Im Stand der Technik sind bereits eine Vielzahl von Vorderradaufhängungen bei Motorrädern bzw. einspurigen Kraftfahrzeugen bekannt. Beispielsweise kann den Schriften WO 97/26178 A1, FR 2 744 980 A1 und EP 0 507 088 A1 jeweils eine solche Vorderradaufhängung entnommen werden. Dokument EP0507088A1 zeigt die Präambel des Anspruchs 1.

Zu den bekannten Vorderradaufhängungen gehört auch die derzeit unter der Bezeichnung Telelever bekannte Vorderradaufhängung. Diese besteht im Wesentlich aus einer angepassten Teleskopgabel, einem Längslenker und einem Federbein. Durch die Teleskopgabel, welche zwei Gabelbeine und zwei die Gabelbeine miteinander verbindende Gabelbrücken umfasst, wird das Vorderrad des Motorrads geführt und eine Lenkbewegung auf das Vorderrad übertragen. Die Teleskopgabel bzw. die Gabelbeine übernehmen hierbei im Regelfall keine Federung und Dämpfung des Vorderrades. Eine erste Gabelbrücke verbindet die Gabelbeine an einem oberen Ende nahe dem Motorradlenker und ist im Stand der Technik drehbar mit einem Lenkkopf des Motorrads bzw. mit einem Rahmen des Motorrads verbunden. Eine zweite Gabelbrücke verbindet die Gabelbeine nahe dem Vorderrad. Der Längslenker ist drehbar mit der zweiten Gabelbrücke und dem Motorradrahmen verbunden und somit wie eine Schwinge drehbar gelagert. Zwischen dem Längslenker und dem Motorradrahmen bzw. dem Lenkkopf des Motorrads ist das Federbein angeordnet, welches diese gegeneinander abstützt. Bei einer Bewegung des Vorderrades nach oben oder unten, wird diese Bewegung über die untere Gabelbrücke und den Längslenker von dem Federbein gefedert bzw. gedämpft. Dabei kommt es durch die Kinematik der Vorderradaufhängung nicht lediglich zu einer Aus- oder Einfederbewegung entlang der Gabelbeine oder entlang des Federbeines, sondern auch zu einer Drehung bzw. zu einer Kippbewegung der gesamten Teleskopgabel um eine zu der Lenkachse orthogonalen Kippachse am Lenkkopf, so dass sich der Winkel zwischen der Teleskopgabel und der Motorradrahmen verändert. Diese Kippbewegung wird bei den im Stand der Technik bekannten Systemen meist unmittelbar auf den Motorradlenker und über diesen auf den Fahrer des Motorrads übertragen. Solche Kippbewegungen können den Fahrer verunsichern und dadurch beispielsweise zu Fahrfehlern führen.

Der Erfindung liegt deshalb die Aufgabe zugrunde die vorgenannten Nachteile zu überwinden und eine Lenkvorrichtung bereitzustellen, durch welche der Motorradlenker von einer Kippbewegung der Gabelbeine um eine orthogonal zu der Lenkachse verlaufende Kippachse entkoppelt wird.

Diese Aufgabe wird durch die Merkmalskombination gemäß Patentanspruch 1 gelöst.

Erfindungsgemäß wird eine kippentkoppelte Lenkvorrichtung eines Motorrades vorgeschlagen. Die Lenkvorrichtung umfasst eine Lenkerbrücke zur Aufnahme eines Motorradlenkers, eine Gabelbrücke zur Aufnahme eines Gabelbeins und zumindest eine die Lenkerbrücke mit der Gabelbrücke verbindende Entkopplungsvorrichtung. Die Lenkerbrücke ist um eine Lenkachse drehbar gelagert und um eine zu der Lenkachse orthogonale Kippachse fixiert, wodurch die Lenkerbrücke bzw. der an ihr aufgenommene Motorradlenker nur um die Lenkachse und nicht um die Kippachse drehbar ist. Die Gabelbrücke ist um die Lenkachse und um die Kippachse drehbar gelagert, so dass die Gabelbrücke mit den an ihr vorzugsweise angeordneten Gabelbeinen sowohl eine Lenkbewegung um die Lenkachse als auch eine Kippbewegung um die Kippachse ausführen kann. Um ein von dem Fahrer über den Motorradlenker auf die Lenkerbrücke aufgebrachtes Lenkmoment bzw. eine Lenkbewegung um die Lenkachse von der Lenkerbrücke auf die Gabelbrücke und über die Gabelbrücke und das bzw. die Gabelbeine auf das Vorderrad des Motorrades übertragen zu können, ist die Entkopplungsvorrichtung ausgebildet, eine Lenkbewegung und ein Lenkmoment in eine Lenkrichtung um die Lenkachse zwischen der Lenkerbrücke und der Gabelbrücke zu übertragen und eine Kippbewegung in eine Kipprichtung um die Kippachse der Gabelbrücke gegenüber der Lenkerbrücke auszugleichen, so dass zwar eine Lenkbewegung von der Lenkerbrücke auf die Gabelbrücke übertragen, eine Kippbewegung von der Gabelbrücke auf die Lenkerbrücke jedoch nicht übertragen wird.

Da sowohl die Lenkerbrücke als auch die Gabelbrücke um die Lenkachse drehbar sind, kann eine Lenkbewegung bzw. eine Lenkkraft bzw. ein Lenkmoment von der Entkopplungsvorrichtung zwischen diesen übertragen werden. Bei einer Kippbewegung folgt die Lenkerbrücke jedoch nicht der Kippbewegung, so dass die Lenkerbrücke bzw. der daran fixierbare Motorradlenker bei einer Kippbewegung der Gabelbrücke nicht verkippt. Bei einer Bewegung der Gabelbrücke gegenüber der Lenkerbrücke um die Kippachse, wird die dadurch verursachte Kippbewegung der Gabelbrücke von der Entkopplungsvorrichtung durch elastische Verformung oder eine diese Bewegung erlaubende Kinematik ausgeglichen, so dass sich die Gabelbrücke im Wesentlichen um die Kippachse entkoppelt von der Lenkerbrücke bewegen kann.

Besonders vorteilhaft ist, wenn sich die Entkopplungsvorrichtung in eine Umfangsrichtung um die Lenkachse starr ausgebildet ist, so dass sich die Entkopplungsvorrichtung bei einer Lenkbewegung bzw. um die Lenkachse starr verhält und die Lenkbewegung bzw. das Lenkmoment direkt zwischen der Gabelbrücke und der Lenkerbrücke übertragen wird.

Erfindungsgemäß umfasst die Lenkvorrichtung zudem einen an der Lenkerbrücke fixierten Lenkzapfen, der sich koaxial entlang der Lenkachse erstreckt und drehbar an einem Motorradrahmen des Motorrads lagerbar und vorzugsweise an dem Motorradrahmen bzw. einem mit dem Motorradrahmen verbundenen Lenkkopf aufnehmbar ist, so dass die Lenkerbrücke durch den Lenkzapfen um die Lenkachse drehbar und zu der Kippachse fixiert mit dem Motorradrahmen verbindbar ist.

Um eine Drehung der Gabelbrücke sowohl um die Lenkachse als auch um die Kippachse zu ermöglichen, sieht die Erfindung vor, dass die Lenkvorrichtung ferner ein Gelenklager mit einem Innenring und einem Außenring umfasst. Der Innenring des Gelenklagers ist konzentrisch zu der Lenkachse an dem Lenkzapfen oder dem Motorradrahmen angeordnet oder fixiert. Darüber hinaus ist der Außenring des Gelenklagers mit der Gabelbrücke verbunden, so dass die Gabelbrücke durch das Gelenklager um die Lenkachse und um die Kippachse drehbar mit dem Motorradrahmen verbindbar ist. Vorzugsweise hat der Innenring hierfür einen kugeligen, konvexen Außendurchmesser, wobei der Außenring an der Innenseite korrespondierend dazu konkav geformt ist, so dass der Außenring um den Innenring sowohl um die Drehachse als auch um die Kippachse bzw. um einem im Zentrum des Innenrings bestimmten Lagerpunkt beweglich ist. Ein solches Gelenklager kann als ein zum Anmeldezeitpunkt als UNIBAL-Gelenklager bekanntes Lager ausgebildet sein.

Eine vorteilhafte Variante der Lenkvorrichtung sieht ferner vor, dass die Entkopplungsvorrichtung zumindest einen Übertragungszapfen und ein Lager zur Übertragung des Lenkmoments umfasst. Der Übertragungszapfen ist exzentrisch zu der Lenkachse an der Lenkerbrücke fixiert, kann aber auch integral mit ihr ausgebildet sein, und erstreckt sich zu der Gabelbrücke in das Lager der Entkopplungsvorrichtung hinein. Vorzugsweise verläuft der Übertragungszapfen parallel zu der Lenkachse. Das Lager der Entkopplungsvorrichtung ist in der Gabelbrücke aufgenommen und ausgebildet, die Kippbewegung der Gabelbrücke in die Kipprichtung um die Kippachse gegenüber dem Übertragungszapfen auszugleichen und die von der Lenkerbrücke auf den Übertragungszapfen übertragbare Lenkbewegung in die Lenkrichtung um die Lenkachse von dem Übertragungszapfen auf die Gabelbrücke zu übertragen. Vorzugsweise ist hierfür vorgesehen, dass das Drehzentrum oder die Drehachse des Lagers, um welche der Übertragungszapfen um die Kippachse bewegbar bzw. drehbar ist, auf der Kippachse oder koaxial zu dieser ist.

Dazu ist bei einer Weiterbildung vorgesehen, dass das Lager der Entkopplungsvorrichtung ein Gelenklager ist und einen Innenring und einen Außenring aufweist. Der Innenring des Gelenklagers ist an dem Übertragungszapfen und vorzugsweise entlang einer Längsrichtung des Übertragungszapfen verschiebbar angeordnet und der Außenring des Gelenklagers mit der Gabelbrücke verbunden und in ihr aufgenommen, so dass die Gabelbrücke durch das Gelenklager um die Kippachse drehbar ist bzw. der Übertragungszapfen in der Gabelbrücke durch das Gelenklager um die Kippachse drehbar ist. Darüber hinaus ist das Gelenklager vorzugsweise mit seinem Drehzentrum auf der Kippachse und exzentrisch zu der Lenkachse angeordnet, so dass der in dem Gelenklager der Entkopplungsvorrichtung gelagerte Übertragungszapfen durch das Gelenklager um die bzw. auf der Kippachse drehbar ist. Eine durch eine Kippbewegung verursachte Änderung eines Abstandes zwischen Gabelbrücke und Lenkerbrücke kann durch die Verschiebbarkeit des Übertragungszapfens in dem Lager ausgeglichen werden.

Das Gelenklager der Entkopplungsvorrichtung umfasst bei einer Variante einen Innenring und einen Außenring. Vorzugsweise hat der Innenring hierfür einen kugeligen, konvexen Außendurchmesser, wobei der Außenring an der Innenseite korrespondierend dazu konkav geformt ist, so dass der Außenring um den Innenring sowohl um die Drehachse als auch um die Kippachse bzw. um einen im Zentrum des Innenrings bestimmten Lagerpunkt (Drehzentrum) beweglich ist. Ein solches Gelenklager kann ebenfalls als ein zum Anmeldezeitpunkt als UNIBAL-Gelenklager bekanntes Lager bezeichnet werden.

Da in den Gelenklagern der Entkopplungsvorrichtung im Wesentlichen keine Rotation um eine zu der Lenkachse parallele Achse oder um die Lenkachse stattfindet, kann die Lagerung auch durch ein oder mehrere Radiallager gebildet werden, welche konzentrisch zu der Kippachse angeordnet sind und den Übertragungszapfen mittels eines den Übertragungszapfen aufnehmenden Zwischenelements um die Kippachse drehbar lagern.

Alternativ zu einer ein Gelenk- oder Radiallager umfassende Lösung kann, das Lager der Entkopplungsvorrichtung in einer weiteren vorteilhaften Variante eine elastische Hülse aufweisen. Die elastische Hülse des Lagers ist mit einer Innenfläche direkt oder indirekt an dem Übertragungszapfen und vorzugsweise entlang einer Längsrichtung des Übertragungszapfens verschiebbar sowie mit einer Außenfläche direkt oder indirekt an der Gabelbrücke angeordnet. Ferner ist die elastische Hülse in der Gabelbrücke aufgenommen, so dass die Gabelbrücke durch eine elastische Verformung der elastischen Hülse bzw. der jeweilige Übertragungszapfen in der Gabelbrücke durch die elastische Verformung der elastischen Hülse um die Kippachse drehbar ist. Die elastische Hülse bzw. der darin gelagerte Übertragungszapfen sind mit ihrer Längsachse vorzugsweise auf der Kippachse bzw. diese schneidend angeordnet. Eine durch eine Kippbewegung verursachte Änderung eines Abstandes zwischen Gabelbrücke und Lenkerbrücke kann durch eine Verschiebbarkeit des Übertragungszapfens in dem Lager ausgeglichen werden. Die elastische Hülse kann ferner in Radialrichtung und/oder Axialrichtung unterschiedliche Radialsteifigkeiten aufweisen.

Bei einer ebenfalls vorteilhaften Weiterbildung der Lenkvorrichtung ist vorgesehen, dass die Entkopplungsvorrichtung zumindest ein Übertragungselement und zumindest ein Lager zur Übertragung des Lenkmoments umfasst. Das zumindest eine Übertragungselement ist exzentrisch zu der Lenkachse an der Lenkerbrücke fixiert und erstreckt sich zumindest anteilig orthogonal zu der Lenkachse zu dem zumindest einen Lager und ist mit dem Lager verbunden. Das zumindest eine Lager der Entkopplungsvorrichtung ist in der Gabelbrücke aufgenommen und ausgebildet, die Kippbewegung der Gabelbrücke in die Kipprichtung um die Kippachse gegenüber dem Übertragungselement, insbesondere durch Rotation, auszugleichen und die von der Lenkerbrücke auf das Übertragungselement übertragbare Lenkbewegung sowie das Lenkmoment in die Lenkrichtung um die Lenkachse von dem Übertragungselement auf die Gabelbrücke zu übertragen.

Vorteilhaft ist hierbei eine Variante, bei welcher die Entkopplungsvorrichtung als ein Entkopplungselement ausgebildet ist und integral das Übertragungselement und das Lager zur Übertragung des Lenkmoments bildet. Das Entkopplungselement ist um die Lenkachse im Wesentlichen starr, so dass das Lenkmoment übertragen werden kann und um die Kippachse elastisch bzw. reversibel verformbar ausgebildet, so dass die Kippbewegung der Gabelbrücke gegenüber der Lenkerbrücke durch elastische Verformung des Entkopplungselements ausgeglichen werden kann. Das Entkopplungselement erstreckt sich zwischen der Lenkerbrücke und der Gabelbrücke und ist an diesen fixiert. Als Lager wird hierbei ein Mittel zum Ausgleich der Bewegung der Gabelbrücke relativ zu der Lenkerbrücke verstanden, so dass das Lager bei dieser Variante durch die elastische Verformbarkeit des Entkopplungselements um die Kippachse gebildet wird, wobei zusätzlich ein Gummilager oder dergleichen vorgesehen sein kann, über welches das Entkopplungselement mit der Gabelbrücke verbunden ist.

Eine weitere Variante sieht vor, dass das zumindest eine Übertragungselement flach ist und sich im Wesentlichen in einer Ebene orthogonal zu der Lenkachse erstreckt. Dadurch verhält sich das Übertragungselement in der Ebene, in welcher es sich flach erstreckt, starr, so dass in das Übertragungselement eingeleitete Längskräfte um die Lenkachse ohne eine wesentliche Verformung des Übertragungselements in diesem weitergeleitet werden können.

Ferner ist das zumindest eine Übertragungselement vorzugsweise federnd und bei einer vorteilhaften Variante aus Federstahl gebildet.

Insbesondere kann das zumindest eine Übertragungselement als ein Blech ausgebildet sein.

Wird eine Entkopplungsvorrichtung mit zumindest einem Übertragungselement verwendet, sieht eine weitere vorteilhafte Ausbildungsvariante vor, dass die Entkopplungsvorrichtung zwei entlang der Lenkachse beabstandete Übertragungselemente aufweist, welche durch einen im Wesentlichen parallel zu der Lenkachse verlaufenden Abstandsbolzen miteinander und mit der Lenkerbrücke verbunden sind. Der Abstandsbolzen kann durch eine Lagerung um eine zu der Kippachse parallele Achse drehbar an Lenkachse gelagert sein, wobei er ebenfalls starr an der Lenkerbrücke fixiert sein kann. Die Lenkachse und eine Mittel- bzw. Längsachse des Abstandsbolzens verlaufen zueinander beabstandet in einer Mittelebene, welche die Lenkvorrichtung vorzugsweise symmetrisch schneidet. Die Übertragungselemente sind ferner durch ein versetzt zu der Mittelebene angeordnetes Verbindungselement miteinander verbunden und weiter vorzugsweise an ihren jeweiligen Enden in Längsrichtung durch jeweils ein Verbindungselement verbunden. Das Verbindungselement ist in dem Lager aufgenommen und durch das Lager an der Gabelbrücke gelagert. Alternativ ist das Verbindungselement integral mit dem Lager ausgebildet. Vorzugsweise ist das Lager bzw. sind die Lager der Entkopplungsvorrichtung mit ihrem Drehzentrum bzw. ihrer Drehachse auf bzw. koaxial zu der Kippachse angeordnet und das Verbindungselement durch das jeweilige Lager auf bzw. um die Kippachse drehbar. Darüber hinaus sind die Übertragungselemente zumindest an dem Lager vorzugsweise symmetrisch um die Kippachse angeordnet. Durch eine Kippbewegung der Gabelbrücke werden die Übertragungselemente nicht belastet, da die Kippbewegung durch die Lager der Entkopplungsvorrichtung ausgeglichen wird. Eine Lenkbewegung bzw. ein Lenkmoment wird jedoch von den Übertragungselementen zwischen der Lenkerbrücke und der Gabelbrücke übertragen.

Eine ebenfalls vorteilhafte Variante der zumindest einen Entkopplungsvorrichtung sieht zudem vor, dass die Entkopplungsvorrichtung zumindest einen Übertragungszapfen umfasst, der an der Lenkerbrücke oder der Gabelbrücke ein vorgesehen ist und der sich vorzugsweise im Wesentlichen parallel zu der Lenkachse von der Lenkerbrücke oder der Gabelbrücke zu der jeweils anderen in eine an der jeweils anderen vorgesehenen Ausnehmung hinein erstreckt. Die Ausnehmung weist eine Längserstreckung in eine Längsrichtung, die orthogonal zu der Lenkachse und orthogonal zur Kippachse verläuft, und eine Breitenerstreckung in eine Breitenrichtung auf, die parallel zu der Kippachse verläuft. Die Längserstreckung ist größer ist als die Breitenerstreckung, so dass der Übertragungszapfen bei der Kippbewegung in der Ausnehmung entlang der Längsrichtung der Ausnehmung verschiebbar oder um die Kippachse drehbar ist ohne gegen die Wände der Ausnehmung anzustoßen, welche die Ausnehmung in ihre Längsrichtung, also in die Richtung orthogonal zu der Kippachse begrenzen. Bei einer Kippbewegung der Gabelbrücke, durch welche es zu einer Relativbewegung der Gabelbrücke zu der Lenkerbrücke kommt, kann der Übertragungszapfen entlang der Längsrichtung der Ausnehmung in der Ausnehmung wandern bzw. sich bewegen, wodurch die Kippbewegung der Gabelbrücke ausgeglichen wird. Bei einer Lenkbewegung um die Lenkachse kommt der Übertragungszapfen an den Seitenwänden der Ausnehmung zur Anlage, welche die Ausnehmung orthogonal zu der Kippachse begrenzen, so dass die Lenkkräfte dadurch übertragbar sind.

Die Ausnehmung muss nicht vollständig geschlossen sein. Beispielsweise kann auch vorgesehen sein, dass ein Übertragungszapfen an einer Außenkontur der Gabelbrücke zur Anlage kommen kann, so dass die Ausnehmung durch die Außenkontur der Gabelbrücke gebildet wird. Insbesondere bei einer Paarung zweier Übertragungszapfen kann vorgesehen sein, dass jeder Übertragungszapfen nur an einer Fläche der Gabelbrücke zur Anlage kommen kann, so dass die Lenkbewegung in eine erste Richtung um die Lenkachse nur durch einen der Übertragungszapfen und in eine zweite Richtung nur durch den anderen der Übertragungszapfen übertragen wird.

Ein solcher Übertragungszapfen oder mehrere solcher Übertragungszapfen kann/können zusätzlich zu anderen erfindungsgemäßen Entkopplungsvorrichtungen vorgesehen sein und hierbei als Sicherheitszapfen bezeichnet werden. Insbesondere kann auch eine Ausführungsform vorgesehen sein welche als (erste) Entkopplungsvorrichtung in einem Lager an der Gabelbrücke gelagerte (erste) Übertragungszapfen vorsieht und als weitere (zweite) Entkopplungsvorrichtung zumindest einen sich in eine Ausnehmung erstreckenden (zweiten) Übertragungszapfen als Sicherheitszapfen.

Um eine Reibung zwischen dem (zweiten) Übertragungszapfen bzw. Sicherheitszapfen und einer Innenwand der Ausnehmung zu minimieren, sieht eine vorteilhafte Weiterbildung vor, dass der Übertragungszapfen in Breitenrichtung der Ausnehmung gleitfähig an einer zu dem Übertragungszapfen weisenden Innenwand der Ausnehmung oder einem in der Ausnehmung angeordneten Gleiteinsatz anliegt.

Darüber hinaus können/kann der (zweite) Übertragungszapfen und/oder der Gleiteinsatz zumindest abschnittsweise aus einem thermoplastischen Material gebildet sein. Alternativ zu dem thermoplastischen Material kann auch ein anderes abriebsfestes und gleitfähiges Material verwendet werden.

Die Lenkvorrichtung kann mehrere Entkopplungsvorrichtungen vorsehen, um zur Übertragung der Lenkbewegung bzw. des Lenkmoments eine Redundanz zu schaffen und die Sicherheit zu erhöhen. Beispielsweise kann neben einer Entkopplungsvorrichtung, welche Übertragungselemente verwendet, eine Entkopplungsvorrichtung mit einem Übertragungszapfen vorgesehen sein. Kommt es durch Verschleiß oder Überlast an den Übertragungselementen zu einem Schaden, kann das Fahrzeug mit der Lenkvorrichtung durch die zweite Entkopplungsvorrichtung weiterhin sicher bedient werden. Umfasst die Lenkvorrichtung mehrere Entkopplungsvorrichtungen, kann auch vorgesehen sein, dass der Übertragungszapfen bzw. der Sicherheitszapfen als zweite Entkopplungsvorrichtung vorgesehen ist und der Zapfen sich in die Ausnehmung der Gabelbrücke hinein erstreckt, jedoch vorzugsweise im normalen Betrieb nicht an den Wänden der Ausnehmung anliegt und zu diesen einen Abstand aufweist. Der Sicherheitszapfen bzw. Übertragungszapfen dient hierbei der Redundanz der Entkopplungsvorrichtung und liegt beispielsweise nur bei einer Lenkbewegung im Falle eines Versagens der ersten Entkopplungsvorrichtung an den Wänden der Ausnehmung an, so dass nur im Falle des Versagens der ersten Entkopplungsvorrichtung ein Lenkmoment von der zweiten Entkopplungsvorrichtung übertragen wird.

Ein weiterer Aspekt der Erfindung betrifft zudem ein Motorrad umfassend eine erfindungsgemäße Lenkvorrichtung, wobei das Motorrad ferner eine Vorderradaufhängung mit zwei Gabelbeinen, einer oberen Gabelbrücke, einer unteren Gabelbrücke, einem Längslenker und einem Federbein aufweist. Die obere und die untere Gabelbrücke verbinden die Gabelbeine miteinander, wobei die Gabelbeine an der oberen Gabelbrücke vorzugsweise geklemmt sind. Der Längslenker verbindet die untere Gabelbrücke beweglich mit einem Motorradrahmen des Motorrads und das Federbein stützt den Längslenker gegen den Motorradrahmen ab. Die obere Gabelbrücke ist dabei die Gabelbrücke der Lenkvorrichtung, durch welche die Vorderradaufhängung von einem Motorradlenker des Motorrads kippentkoppelt ist.

Entsprechend weist das Motorrad im Wesentlichen eine zum Anmeldezeitpunkt sogenannte Telelever und eine erfindungsgemäße Lenkvorrichtung auf, deren obere Gabelbrücke von der Lenkerbrücke kippentkoppelt ist, so dass eine Kippbewegung der Vorderradaufhängung bzw. der Gabelbeine nicht auf den Motorradlenker übertragen wird.

Durch die obere Gabelbrücke bzw. dadurch, dass die Gabelbeine über zwei Gabelbrücken miteinander verbunden sind, wird zudem die Vorderradaufhängung des Motorrades zusätzlich versteift, was sich positiv auf das Fahrverhalten des Fahrzeugs auswirkt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein Schnitt durch eine erste Variante der Lenkvorrichtung;
- Fig. 2: eine perspektivische Ansicht der ersten Variante der Lenkvorrichtung;
- Fig. 3: eine perspektivische Ansicht eines Teils der ersten Variante der Lenkvorrichtung;
- Fig. 4: eine Ansicht von oben auf die erste Variante der Lenkvorrichtung;
- Fig. 5: eine Ansicht von oben auf einen Teil der ersten Variante der Lenkvorrichtung;
- Fig. 6: eine Ansicht von vorn auf eine zweite Variante der Lenkvorrichtung;
- Fig. 7: ein erster Schnitt durch die zweite Variante der Lenkvorrichtung;
- Fig. 8: ein zweiter Schnitt durch die zweite Variante der Lenkvorrichtung;
- Fig. 9: eine perspektivische Ansicht einer dritten Variante der Lenkvorrichtung;
- Fig. 10: ein Schnitt durch die dritte Variante der Lenkvorrichtung.

Die Figuren sind beispielhaft schematisch. Gleiche Bezugszeichen in den Figuren weisen auf gleiche funktionale und/oder strukturelle Merkmale hin.

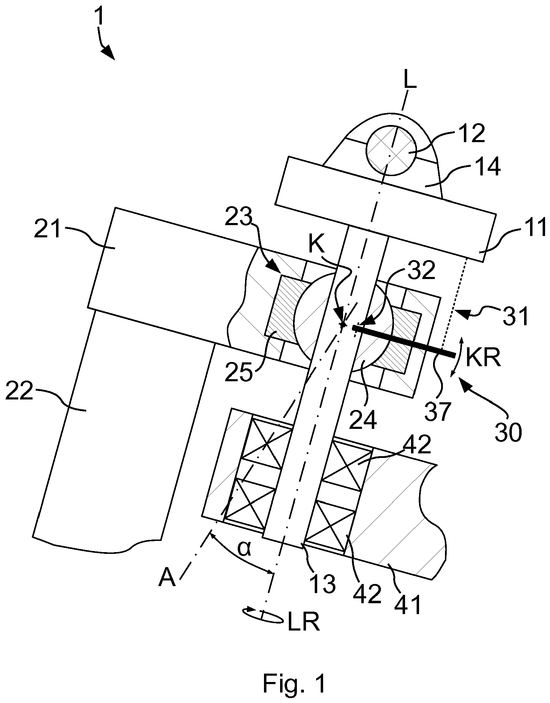

In Figur 1 ist eine erste Variante der erfindungsgemäßen Lenkvorrichtung 1 in einer teilweise geschnitten Seitenansicht dargestellt. Die Lenkachse L liegt in der Darstellungsebene und die Kippachse K steht senkrecht zur Darstellungsebene, wobei sich die Ausrichtung der Kippachse K abhängig von einem Lenkwinkel ändern kann. Die Kippachse K verläuft jedoch immer in einer Ebene, die orthogonal zur Lenkachse L ausgerichtet ist. Bei einer Federbewegung der Vorderradaufhängung schwenkt die Gabelbrücke 21 mit den vorzugsweise zwei daran aufgenommenen Gabelbeinen 22 um die Kippachse K, so dass sich der Winkel α zwischen der Lenkachse L und einer von dem Lagerpunkt der Gabelbrücke 21 zu dem Vorderrad verlaufenden Achse A ändert. Die Gabelbrücke 21 ist über ein Gelenklager 23 an einem Lenkzapfen 13 gelagert, so dass die Gabelbrücke 21 sowohl um die Lenkachse L drehbar als auch um die Kippachse K kippbar ist. Der Lagerpunkt der Gabelbrücke 21 wird dabei vorzugsweise von dem Gelenklager 23 bestimmt und liegt auf der Lenkachse L bzw. im Schnittpunkt der Lenkachse L und der Kippachse K, so dass die Gabelbrücke 21 in alle Richtungen um ihren Lagerpunkt schwenkbar ist. Der Lenkzapfen 13 ist an einer Lenkerbrücke 11 vorzugsweise drehfest fixiert. An der Lenkerbrücke 11 ist an einer Lenkeraufnahme 14 der Lenkerbrücke 11 ein Motorradlenker 12 fixierbar. Ferner ist der Lenkzapfen 13 an einem der Lenkerbrücke 11 gegenüber liegenden Abschnitt des Lenkzapfens 13 durch Lager 42 an einem Motorradrahmen 41 oder einem mit dem Motorradrahmen 41 verbundenen Lenkkopf drehbar gelagert bzw. lagerbar, so dass die Lenkerbrücke 11 gegenüber dem Motorradrahmen 41 um die konzentrisch zu dem Lenkzapfen 13 verlaufende Lenkachse L dreh- bzw. lenkbar ist, gegenüber dem Motorradrahmen 41 jedoch nicht verkippen kann. Um eine Lenkbewegung entlang einer Lenkrichtung LR um die Lenkachse L von der Lenkerbrücke 11 auf die Gabelbrücke 21 zu übertragen, ist eine in dieser Variante durch ein Entkopplungselement gebildete Entkopplungsvorrichtung 30 vorgesehen.

Das Gelenklager 23 weist einen kugeligen Innenring 24 auf, der an bzw. um den Lenkzapfen 13 angeordnet und vorzugsweise drehfest an ihm fixiert ist, sowie einen Außenring 25 mit einer zu dem Innenring 24 korrespondierenden Innenfläche, so dass der Außenring 25 bzw. die mit dem Außenring 25 verbundene Gabelbrücke, von Anschlägen begrenzt, in alle Richtungen um den Innenring 24 bzw. den zentrisch in dem Innenring 24 liegenden Lagerpunkt drehbar ist.

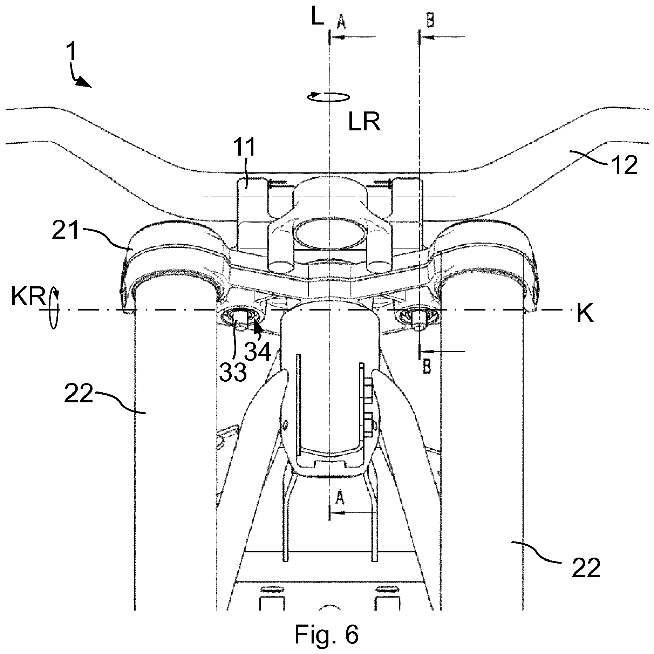

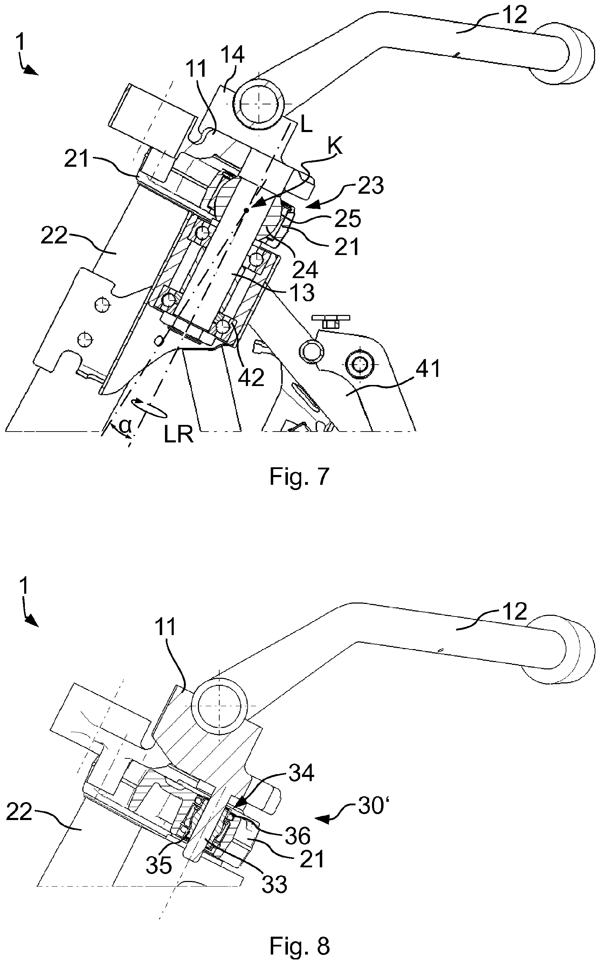

Der in Figur 7 gezeigte Aufbau ist hierzu bis auf die Variante der Entkopplungsvorrichtung 30 identisch, welche daher in Figur 7 nicht sichtbar ist. Die alternative Ausführungsvariante der Schnittdarstellung der Figur 7, ist in der weiteren zu den Figuren 6 bis 8 gehörenden Beschreibung näher erläutert.

Bei der Ausführungsform, wie sie in den Figuren 1 bis 5 gezeigt ist, ist die Entkopplungsvorrichtung 30 als ein Entkopplungselement ausgebildet, welches integral das Übertragungselement 37 und für jede Anbindungsstelle des Übertragungselements 37 an die Gabelbrücke 21 jeweils ein Lager zur Übertragung des Lenkmoments ausbildet, wobei das Lager zur Übertragung des Lenkmoments durch die starre Anbindung des Übertragungselements 37 an Lenkerbrücke 11 und Gabelbrücke 21 sowie die reversible plastische Verformbarkeit bzw. Elastizität um die Kippachse gebildet wird. Im Weiteren entspricht die Entkopplungsvorrichtung 30 in den Figuren 1 bis 5 daher dem Entkopplungselement bzw. dem Übertragungselement 37. Das Übertragungselement 37 bzw. das Entkopplungselement ist zwischen der Lenkerbrücke 11 und der Gabelbrücke 21 angeordnet und über zumindest eine erste Verbindungsanordnung 31 starr an der Lenkerbrücke 11 und über zumindest eine zweite Verbindungsanordnung 32 starr an der Gabelbrücke 21 fixiert. Das Übertragungselement 37 erstreckt sich im Wesentlichen in einer Ebene orthogonal zu der Lenkachse L, so dass als Längskräfte in das Übertragungselement 37 eingebrachte Lenkkräfte um die Lenkachse L bzw. entlang der Lenkrichtung LR von der ersten Verbindungsanordnung 31 auf die zweiten Verbindungsanordnungen 32 ohne eine wesentliche Verformung des Übertragungselement 37 übertragen werden können, wodurch eine Lenkbewegung unmittelbar von der Lenkerbrücke 11 auf die Gabelbrücke 21 übertragbar ist und sich das Übertragungselement 37 um die Lenkachse L starr verhält. In Richtung der Kippbewegung um die Kippachse K ist die erste Verbindungsanordnung 31 von den zweiten Verbindungsanordnungen 32 beabstandet, so dass Kippkräfte um die Kippachse K bzw. entlang der Kipprichtung KR als Querkräfte in das Übertragungselement 37 eingebracht werden, die im wesentlichen senkrecht auf der zu der Lenkachse L orthogonalen Ebene stehen zu einer elastischen Verformung des Übertragungselement 37 führen, wobei das Übertragungselement 37 durch elastische Verformung einen sich ändernden Abstand bzw. eine Verkippung zwischen Lenkerbrücke 11 und Gabelbrücke 21 bei einer Änderung des Winkels α bzw. bei einer Kippbewegung in Kipprichtung KR ausgleicht.

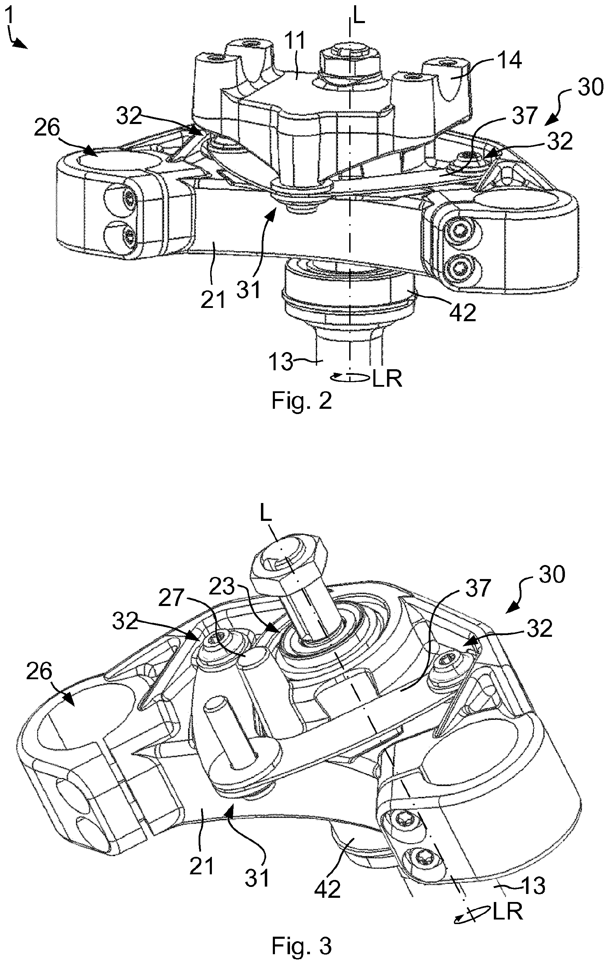

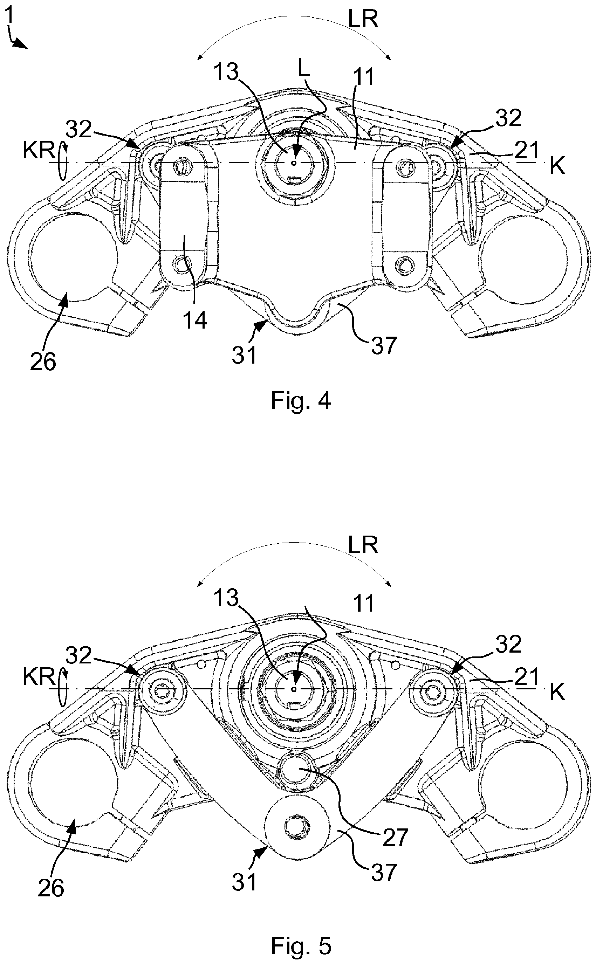

Die Figuren 2 bis 5 zeigen ebenfalls die erste Ausführungsvariante bzw. Teile der ersten Variante der Lenkvorrichtung 1, wobei die Lenkvorrichtung 1 in den Figuren 3 und 5 ohne die Lenkerbrücke 11 dargestellt ist.

Die dargestellte Variante der Lenkvorrichtung 1 sieht an der Gabelbrücke 21 jeweils zwei Gabelbeinaufnahmen 26 vor, so dass an der Gabelbrücke 21 zwei Gabelbeine 22 fixierbar sind. Darüber hinaus ist das Übertragungselement 37 bogenförmig bzw. in Form eines Bumerangs ausgebildet und symmetrisch um die Lenkachse L angeordnet, wobei jeweils eine zweite Verbindungsanordnung 32 an jeweils einem endseitigen Abschnitt des Übertragungselements 37 vorgesehen ist. Die zweiten Verbindungsanordnungen 32 sind ferner auf der Kippachse K angeordnet. Eine erste Verbindungsanordnung 31 ist symmetrisch zwischen den zweiten Verbindungsanordnungen 32 in einer Symmetrie- bzw. Mittelebene durch die Lenkvorrichtung 1 vorgesehen, so dass eine Kippbewegung der Gabelbrücke 21 gegenüber der gegen die Kippbewegung fixierten Lenkerbrücke 11 von dem Entkopplungselement durch eine symmetrische Verformung ausgeglichen wird, wobei sich insbesondere jeweils die Abschnitte des Übertragungselement 37 zwischen einer der zweiten Verbindungsanordnungen 32 und der ersten Verbindungsanordnung 31 reversibel bzw. elastisch in Kipprichtung KR verformen.

Ferner ist in den Figuren 3 und 5 ein Übertragungs- bzw. Sicherheitszapfen 27 dargestellt, der von der Gabelbrücke 21 ausgebildet wird und sich in Richtung bzw. in eine nicht dargestellte Ausnehmung der Lenkerbrücke 11 erstreckt. Der Übertragungs- bzw. Sicherheitszapfen 27 ist ausgebildet, eine Lenkbewegung bzw. Lenkkraft bei einer nicht zulässigen Verformung und/oder einem mechanischen Versagen des Übertragungselement 37 zwischen der Lenkerbrücke 11 und der Gabelbrücke 21 zu übertagen.

Eine zweite Variante der erfindungsgemäßen Lenkvorrichtung 1 ist in den Figuren 6 bis 8 illustriert, bei welcher die Entkopplungsvorrichtung durch zwei zu der Lenkachse L versetzte und gegenüber der Lenkachse L symmetrisch angeordnete Übertragungszapfen 33 bestimmt ist.

In Figur 7 ist ein erster, dem Schnittverlauf A-A folgender Schnitt durch die Lenkvorrichtung 1, wie er in Figur 6 eingezeichnet ist, dargestellt, welcher zugleich einen Längsschnitt durch den Lenkzapfen 13 darstellt.

Die Schnittdarstellung der Figur 8 ist zu dem Schnitt aus Figur 7 parallel versetzt und zeigt dadurch einen der beiden Übertragungszapfen 33 im Längsschnitt, wobei der Schnitt der Figur 8 dem Schnittverlauf B-B wie in Figur 6 eingezeichnet folgt.

Die in den Figuren 6 bis 8 gezeigte Variante sieht vor, dass die Übertragungszapfen 33 integral mit der Lenkerbrücke 11 ausgebildet sind und sich von dieser in die Gabelbrücke 21 hinein erstrecken, wobei sie in den Gabelbrücke 21 durch jeweils ein als Gelenklager 34 ausgebildetes Lager zur Übertragung des Lenkmoments an der Gabelbrücke 21 anliegen, so dass Lenkkräfte über die Übertragungszapfen 33 und die Gelenklager 34 von der Lenkerbrücke 11 auf die Gabelbrücke 21 übertragen werden können.

Die Gelenklager 34 umfassen jeweils, wie in Figur 8 dargestellt, einen Innenring 35, welcher an dem jeweiligen Übertragungszapfen 33 anliegt, wobei der Übertragungszapfen 33 in dem Innenring 35 gleiten kann. Darüber hinaus umfasst das Gelenklager 34 einen Außenring 36, welcher an seiner Innenseite mit dem Innenring 35 und an seiner Außenseite mit der Gabelbrücke 21 in Verbindung steht, so dass die Lenkkräfte von dem jeweiligen Übertragungszapfen 33 auf den Innenring 35, von dem Innenring 35 auf den Außenring 36 und von dem Außenring 36 auf die Gabelbrücke 21 übertragbar sind. Der Innenring 35 ist zudem gegenüber dem Außenring 36 konvex und der Außenring 36 dazu korrespondierend ausgebildet. Entsprechend ist das Gelenklager 34 bei der dargestellten Variante als ein zum Zeitpunkt der Anmeldung als sogenanntes UNIBAL-Lager bekanntes Lager ausgebildet, so dass sich der Innenring 35 zu dem Außenring 36 um ein zentrisch zu dem Innenring 35 liegendes Drehzentrum drehen kann, wobei durch die Drehbarkeit des Innenrings 35 gegenüber dem Außenring 36 und durch die Gleitfähigkeit des jeweiligen Übertragungszapfens 33 in dem Innenring 35 eine Bewegung der Lenkerbrücke 11 relativ zu der Gabelbrücke 21 um die Kippachse K ausgeglichen werden kann.

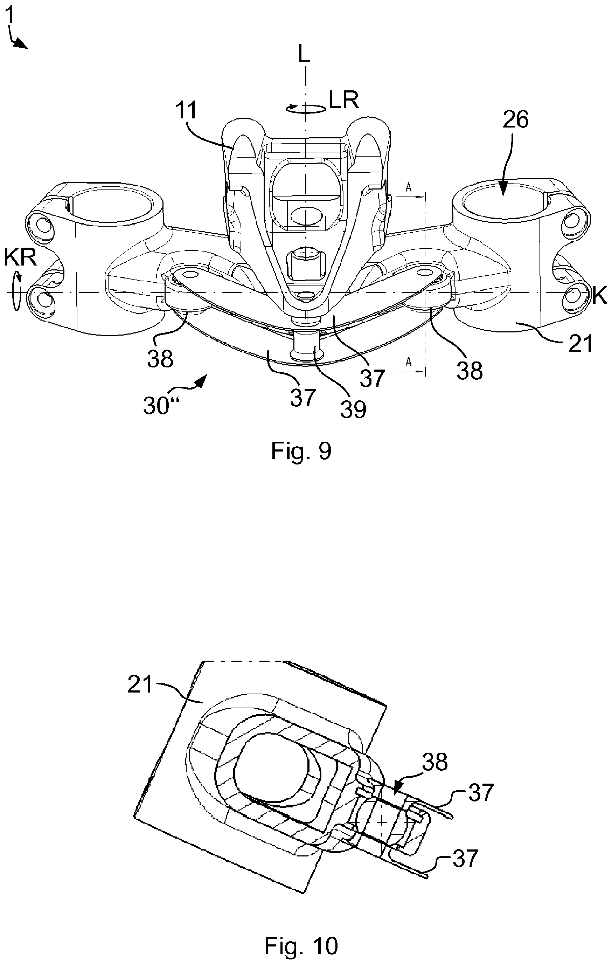

In den Figuren 9 und 10 ist eine weitere vorteilhafte Variante der erfindungsgemäßen Lenkvorrichtung 1 dargestellt, wobei in Figur 9 die Lenkvorrichtung 1 perspektivisch dargestellt ist und Figur 10 eine Schnittdarstellung durch die Lenkvorrichtung 1 zeigt, welche dem in Figur 9 eingezeichneten Schnittverlauf A-A folgt.

Die Lenkvorrichtung 1 in den Figuren 9 und 10 umfasst eine Entkopplungsvorrichtung 30" mit zwei entlang der Lenkachse L beabstandeten Übertragungselementen 37, welche durch einen im Wesentlichen parallel zu der Lenkachse L verlaufenden Abstandsbolzen 39 miteinander und mit der Lenkerbrücke 11 verbunden sind. Die Übertragungselemente 37 sind aus einer Aufsicht bzw. einer Ansicht von oben auf die Lenkvorrichtung 1 im Wesentlichen deckungsgleich und bumerangförmig ausgebildet, wobei sie an ihren jeweiligen äußeren Enden gemeinsam über jeweils ein Lager 38 mit der Gabelbrücke 21 verbunden sind. Die Übergangselemente 37 sind hierzu an ihren äußeren Enden durch ein nicht dargestelltes Verbindungselement, wie beispielsweise einem Bolzen oder einer Schrauben-Mutter-Kombination verbunden, welches sich durch das jeweilige Lager 38 erstreckt und dadurch die Übertragungselemente 37 an dem jeweiligen Lager 38 fixiert. Wie in Figur 10 dargestellt, ist das Lager als ein zum Zeitpunkt der Anmeldung als UNIBAL-Lager bekanntes Gelenklager ausgebildet, wobei dieses alternativ auch als ein anderes Gelenklager oder als ein Radiallager ausgebildet sein kann. Der Abstandsbolzen 39 ist starr an der Lenkerbrücke 11 befestigt. Die Übertragungselemente 37 verlaufen zudem im Wesentlichen orthogonal zu der Lenkachse L, so dass diese sich gegenüber einer Kraft bzw. einem Moment um die Lenkachse L starr verhalten und über die Übertragungselemente 37 und die jeweiligen Anbindungen an die Gabelbrücke 21 und die Lenkerbrücke 11 eine Lenkkraft von der Lenkerbrücke 11 auf die Gabelbrücke 21 übertragen werden kann. Gegenüber einem Moment bzw. einer Kraft um die Kippachse K sind die Übertragungselemente 37 wiederum elastisch verformbar, so dass die Kippbewegung zusätzlich ausgeglichen werden kann.

## Patentansprüche

1. Kippentkoppelte Lenkvorrichtung (1) für ein Motorrad umfassend eine Lenkerbrücke (11) zur Aufnahme eines Motorradlenkers (12), eine Gabelbrücke (21) zur Aufnahme eines Gabelbeins (22) und zumindest eine die Lenkerbrücke (11) mit der Gabelbrücke (21) verbindende Entkopplungsvorrichtung (30, 30', 30"), wobei die Lenkerbrücke (11) um eine Lenkachse (L) drehbar gelagert und um eine zu der Lenkachse (L) orthogonale Kippachse (K) fixiert ist, wobei die Gabelbrücke (21) um die Lenkachse (L) und um die Kippachse (K) drehbar gelagert ist, wobei die Entkopplungsvorrichtung (30, 30', 30") ausgebildet ist, eine Lenkbewegung und ein Lenkmoment in eine Lenkrichtung (LR) um die Lenkachse (L) zwischen der Lenkerbrücke (11) und der Gabelbrücke (21) zu übertragen und eine Kippbewegung in eine Kipprichtung (KR) um die Kippachse (K) der Gabelbrücke (21) gegenüber der Lenkerbrücke (11) auszugleichen,
wobei
die Lenkvorrichtung ferner ein an der Lenkerbrücke (11) fixierten Lenkzapfen (13) umfasst, der sich koaxial entlang der Lenkachse (L) erstreckt und drehbar an einem Motorradrahmen (41) des Motorrads lagerbar ist, so dass die Lenkerbrücke (11) durch den Lenkzapfen (13) um die Lenkachse (L) drehbar und zu der Kippachse (K) fixiert mit dem Motorradrahmen (41) verbindbar ist, **dadurch gekennzeichnet, dass** die Lenkvorrichtung ferner
ein Gelenklager (23) mit einem Innenring (24) und einem Außenring (25) umfasst, wobei
der Innenring (24) des Gelenklagers (23) konzentrisch zu der Lenkachse (L) an dem Lenkzapfen (13) oder dem Motorradrahmen (41) angeordnet oder fixiert ist und der Außenring (25) des Gelenklagers (23) mit der Gabelbrücke (21) verbunden ist, so dass die Gabelbrücke (21) durch das Gelenklager (23) um die Lenkachse (L) und um die Kippachse (K) drehbar mit dem Motorradrahmen (41) verbindbar ist.

2. Lenkvorrichtung nach einem der vorhergehenden Ansprüche, wobei die Entkopplungsvorrichtung zumindest einen Übertragungszapfen (33) und ein Lager zur Übertragung des Lenkmoments umfasst, wobei der Übertragungszapfen (33) exzentrisch zu der Lenkachse (L) an der Lenkerbrücke (11) fixiert ist und sich zu der Gabelbrücke (21) in das Lager der Entkopplungsvorrichtung (30') hinein erstreckt, wobei das Lager der Entkopplungsvorrichtung (30') in der Gabelbrücke (21) aufgenommen ist und ausgebildet ist, die Kippbewegung der Gabelbrücke (21) in die Kipprichtung (KR) um die Kippachse (K) gegenüber dem Übertragungszapfen (33) auszugleichen und die von der Lenkerbrücke (11) auf den Übertragungszapfen (33) übertragbare Lenkbewegung in die Lenkrichtung (LR) um die Lenkachse (L) von dem Übertragungszapfen (33) auf die Gabelbrücke (21) zu übertragen.

3. Lenkvorrichtung nach dem vorhergehenden Anspruch, wobei das Lager der Entkopplungsvorrichtung (30') ein Gelenklager (34) ist und einen Innenring (35) und einen Außenring (36) aufweist, wobei der Innenring (35) des Gelenklagers (34) an dem Übertragungszapfen (33) angeordnet ist und der Außenring (35) des Gelenklagers (34) mit der Gabelbrücke (21) verbunden und in ihr aufgenommen ist, so dass der Übertragungszapfen (33) in der Gabelbrücke (21) durch das Gelenklager (34) um die Kippachse (K) drehbar ist.

4. Lenkvorrichtung nach Anspruch 2, wobei das Lager der Entkopplungsvorrichtung (30') eine elastische Hülse aufweist, wobei die elastische Hülse des Lagers mit einer Innenfläche direkt oder indirekt an dem Übertragungszapfen (33) und einer Außenfläche direkt oder indirekt an der Gabelbrücke (21) angeordnet ist und die elastische Hülse in der Gabelbrücke (21) aufgenommen ist, so dass der Übertragungszapfen (33) in der Gabelbrücke (21) durch eine elastische Verformung der elastische Hülse um die Kippachse (K) drehbar ist.

5. Lenkvorrichtung nach Anspruch 1, wobei die Entkopplungsvorrichtung (30, 30") zumindest ein Übertragungselement (37) und zumindest ein Lager (38) zur Übertragung des Lenkmoments umfasst, wobei das zumindest eine Übertragungselement (37) exzentrisch zu der Lenkachse (L) an der Lenkerbrücke (11) fixiert ist und sich zumindest anteilig orthogonal zu der Lenkachse (L) zu dem zumindest einen Lager (38) erstreckt und mit dem Lager verbunden ist, wobei das zumindest eine Lager (38) der Entkopplungsvorrichtung (30, 30") in der Gabelbrücke (21) aufgenommen ist und ausgebildet ist, die Kippbewegung der Gabelbrücke (21) in die Kipprichtung (KR) um die Kippachse (K) gegenüber dem Übertragungselement (37) auszugleichen und die von der Lenkerbrücke (11) auf das Übertragungselement (37) übertragbare Lenkbewegung sowie das Lenkmoment in die Lenkrichtung (LR) um die Lenkachse (L) von dem Übertragungselement (37) auf die Gabelbrücke (21) zu übertragen.

6. Lenkvorrichtung nach dem vorhergehenden Anspruch, wobei die Entkopplungsvorrichtung (30) als ein Entkopplungselement ausgebildet ist und integral das Übertragungselement (37) und das Lager (38) zur Übertragung des Lenkmoments bildet, wobei das Entkopplungselement um die Lenkachse (L) starr und um die Kippachse (K) elastisch ausgebildet ist, sich zwischen der Lenkerbrücke (11) und der Gabelbrücke (21) erstreckt und an diesen fixiert ist.

7. Lenkvorrichtung nach einem der vorhergehenden Ansprüche 2. 5 oder 6, wobei das zumindest eine Übertragungselement (37) flach ist und sich im Wesentlichen in einer Ebene orthogonal zu der Lenkachse (L) erstreckt.

8. Lenkvorrichtung nach einem der vorhergehenden Ansprüche 2. 5 bis 7, wobei das zumindest eine Übertragungselement (37) aus Federstahl gebildet ist.

9. Lenkvorrichtung nach einem der vorhergehenden Ansprüche 5 bis 8, wobei die Entkopplungsvorrichtung (30") zwei entlang der Lenkachse (L) beabstandete Übertragungselemente (37) aufweist, welche durch einen im Wesentlichen parallel zu der Lenkachse verlaufenden Abstandsbolzen (39) miteinander und mit der Lenkerbrücke (11) verbunden sind, wobei die Lenkachse (L) und eine Mittelachse des Abstandsbolzens zueinander beabstandet in einer Mittelebene verlaufen und die Übertragungselemente (37) durch ein versetzt zu der Mittelebene angeordnetes Verbindungselement miteinander verbunden sind, wobei das Verbindungselement in dem Lager (38) aufgenommen und durch das Lager (38) an der Gabelbrücke (21) gelagert ist oder das Verbindungselement integral mit dem Lager (38) ausgebildet ist.

10. Lenkvorrichtung nach einem der vorhergehenden Ansprüche, wobei die Entkopplungsvorrichtung (30, 30', 30") zumindest einen Übertragungszapfen (27) umfasst, der an der Lenkerbrücke (11) oder der Gabelbrücke (21) ein vorgesehen ist und der sich von der Lenkerbrücke (11) oder der Gabelbrücke (21) zu der jeweils anderen in eine an der jeweils anderen vorgesehenen Ausnehmung hinein erstreckt, wobei die Ausnehmung eine Längserstreckung in eine Längsrichtung aufweist, die orthogonal zu der Lenkachse (L) und orthogonal zur Kippachse (K) verläuft, und eine Breitenerstreckung in eine Breitenrichtung aufweist, die parallel zu der Kippachse (K) verläuft, wobei die Längserstreckung größer ist als die Breitenerstreckung, so dass der Übertragungszapfen (27) bei der Kippbewegung in der Ausnehmung entlang der Längsrichtung der Ausnehmung verschiebbar ist.

11. Lenkvorrichtung dem vorhergehenden Anspruch, wobei der Übertragungszapfen (27) in Breitenrichtung der Ausnehmung gleitfähig an einer zu dem Übertragungszapfen (27) weisenden Innenwand der Ausnehmung oder einem in der Ausnehmung angeordneten Gleiteinsatz anliegt.

12. Lenkvorrichtung dem vorhergehenden Anspruch, wobei der Übertragungszapfen (27) und/oder der Gleiteinsatz zumindest abschnittsweise aus einem thermoplastischen Material gebildet ist.

13. Motorrad umfassend eine Lenkvorrichtung (1) nach einem der vorhergehenden Ansprüche sowie eine Vorderradaufhängung mit zwei Gabelbeinen (22), einer oberen Gabelbrücke, einer unteren Gabelbrücke, einem Längslenker und einem Federbein, wobei die obere und die untere Gabelbrücke die Gabelbeine (22) miteinander verbinden, der Längslenker die untere Gabelbrücke beweglich mit einem Motorradrahmen (41) des Motorrads verbindet, das Federbein den Längslenker gegen den Motorradrahmen (41) abstützt und wobei die obere Gabelbrücke die Gabelbrücke (21) der Lenkvorrichtung (1) ist, durch welche die Vorderradaufhängung von einem Motorradlenker (12) des Motorrads kippentkoppelt ist.

## Claims

1. Tilt-decoupled steering apparatus (1) of a motorcycle comprising a handlebar bridge (11) for receiving a motorcycle handlebar (12), a fork bridge (21) for receiving a fork leg (22), and at least one decoupling apparatus (30, 30', 30") which connects the handlebar bridge (11) to the fork bridge (21), the handlebar bridge (11) being mounted such that it can be rotated about a steering axis (L) and being fixed about a tilt axis (K) which is orthogonal with respect to the steering axis (L), the fork bridge (21) being mounted such that it can be rotated about the steering axis (L) and about the tilt axis (K), the decoupling apparatus (30, 30', 30'') being configured to transmit a steering movement and a steering torque in a steering direction (LR) about the steering axis (L) between the handlebar bridge (11) and the fork bridge (21), and to compensate for a tilt movement in a tilt direction (KR) about the tilt axis (K) of the fork bridge (21) with respect to the handlebar bridge (11), the steering apparatus comprising, furthermore, a steering pin (13) which is fixed on the handlebar bridge (11), extends coaxially along the steering axis (L), and can be mounted rotatably on a motorcycle frame (41) of the motorcycle, with the result that the handlebar bridge (11) can be connected by way of the steering pin (13) to the motorcycle frame (41) such that it can be rotated about the steering axis (L) and is fixed with respect to the tilt axis (K), **characterized in that** the steering apparatus comprises, furthermore, a pivot bearing (23) with an inner ring (24) and an outer ring (25), the inner ring (24) of the pivot bearing (23) being arranged on the steering pin (13) or the motorcycle frame (41) concentrically with respect to the steering axis (L), and the outer ring (25) of the pivot bearing (23) being connected to the fork bridge (21), with the result that the fork bridge (21) can be connected by way of the pivot bearing (23) to the motorcycle frame (41) such that it can be rotated about the steering axis (L) and about the tilt axis (K).

2. Steering apparatus according to one of the preceding claims, the decoupling apparatus comprising at least one transmission pin (33) and one bearing for transmitting the steering torque, the transmission pin (33) being fixed on the handlebar bridge (11) eccentrically with respect to the steering axis (L) and extending to the fork bridge (21) into the bearing of the decoupling apparatus (30'), the bearing of the decoupling apparatus (30') being received in the fork bridge (21) and being configured to compensate for the tilt movement of the fork bridge (21) in the tilt direction (KR) about the tilt axis (K) with respect to the transmission pin (33), and to transmit the steering movement, which can be transmitted from the handlebar bridge (11) the transmission pin (33), in the steering direction (LR) about the steering axis (L) from the transmission pin (33) to the fork bridge (21).

3. Steering apparatus according to the preceding claim, the bearing of the decoupling apparatus (30') being a pivot bearing (34) and having an inner ring (35) and an outer ring (36), the inner ring (35) of the pivot bearing (34) being arranged on the transmission pin (33), and the outer ring (35) of the pivot bearing (34) being connected to the fork bridge (21) and being received in the latter, with the result that the transmission pin (33) can be rotated about the tilt axis (K) in the fork bridge (21) by way of the pivot bearing (34).

4. Steering apparatus according to Claim 2, the bearing of the decoupling apparatus (30') having an elastic sleeve, the elastic sleeve of the bearing being arranged with an inner face directly or indirectly on the transmission pin (33) and with an outer face directly or indirectly on the fork bridge (21), and the elastic sleeve being received in the fork bridge (21), with the result that the transmission pin (33) can be rotated about the tilt axis (K) in the fork bridge (21) by way of an elastic deformation of the elastic sleeve.

5. Steering apparatus according to Claim 1, the decoupling apparatus (30, 30") comprising at least one transmission element (37) and at least one bearing (38) for transmitting the steering torque, the at least one transmission element (37) being fixed on the handlebar bridge (11) eccentrically with respect to the steering axis (L) and extending to the at least one bearing (38) at least proportionately orthogonally with respect to the steering axis (L) and being connected to the bearing, the at least one bearing (38) of the decoupling apparatus (30, 30") being received in the fork bridge (21) and being configured to compensate for the tilt movement of the fork bridge (21) in the tilt direction (KR) about the tilt axis (K) with respect to the transmission element (37), and to transmit the steering movement, which can be transmitted from the steering bridge (11) to the transmission element (37), and the steering torque in the steering direction (LR) about the steering axis (L) from the transmission element (37) to the fork bridge (21).

6. Steering apparatus according to the preceding claim, the decoupling apparatus (30) being configured as a decoupling element and forming the transmission element (37) and the bearing (38) for transmitting the steering torque in an integral manner, the decoupling element being of rigid configuration about the steering axis (L) and of elastic configuration about the tilt axis (K), extending between the handlebar bridge (11) and the fork bridge (21) and being fixed on them.

7. Steering apparatus according to either of the preceding Claims 5 or 6, the at least one transmission element (37) being flat and extending substantially in a plane orthogonally with respect to the steering axis (L).

8. Steering apparatus according to one of the preceding Claims 5 to 7, the at least one transmission element (37) being formed from spring steel.

9. Steering apparatus according to one of the preceding Claims 5 to 8, the decoupling apparatus (30") having two transmission elements (37) which are spaced apart along the steering axis (L) and are connected to one another and to the handlebar bridge (11) by way of a spacer bolt (39) which runs substantially parallel to the steering axis, the steering axis (L) and a centre axis of the spacer bolt running spaced apart from one another in a centre plane, and the transmission elements (37) being connected to one another by way of a connecting element which is arranged offset with respect to the centre plane, the connecting element being received in the bearing (38) and being mounted by way of the bearing (38) on the fork bridge (21), or the connecting element being configured integrally with the bearing (38).

10. Steering apparatus according to one of the preceding claims, the decoupling apparatus (30, 30', 30") comprising at least one transmission pin (27) which is provided on the handlebar bridge (11) or the fork bridge (21) and extends from the handlebar bridge (11) or the fork bridge (21) to the respective other one into a recess which is provided on the respective other one, the recess having a longitudinal extent in a longitudinal direction which runs orthogonally with respect to the steering axis (L) and orthogonally with respect to the tilt axis (K), and having a width extent in a width direction which runs parallel to the tilt axis (K), the longitudinal extent being greater than the width extent, with the result that the transmission pin (27) can be displaced in the recess along the longitudinal direction of the recess during the tilt movement.

11. Steering apparatus according to the preceding claim, the transmission pin (27) bearing in a slidable manner in the width direction of the recess against an inner wall, pointing towards the transmission pin (27), of the recess or a sliding insert which is arranged in the recess.

12. Steering apparatus according to the preceding claim, the transmission pin (27) and/or the sliding insert being formed at least in sections from thermoplastic material.

13. Motorcycle comprising a steering apparatus (1) according to one of the preceding claims and a front wheel suspension system with two fork legs (22), an upper fork bridge, a lower fork bridge, a longitudinal link and a spring strut, the upper and the lower fork bridge connecting the fork legs (22) to one another, the longitudinal link connecting the lower fork bridge movably to a motorcycle frame (41) of the motorcycle, the spring strut supporting the longitudinal link against the motorcycle frame (41), and the upper fork bridge being the fork bridge (21) of the steering apparatus (1), by way of which fork bridge (21) the front wheel suspension system is tilt-decoupled from a motorcycle handlebar (12) of the motorcycle.

## Revendications

1. Dispositif de direction découplé en basculement (1) pour une motocyclette, comprenant un pont de guidon (11) pour recevoir un guidon de motocyclette (12), un pont de fourche (21) pour recevoir une jambe de fourche (22) et au moins un dispositif de découplage (30, 30', 30") reliant le pont de guidon (11) au pont de fourche (21), le pont de guidon (11) étant monté de manière rotative autour d'un axe de direction (L) et étant fixé autour d'un axe de basculement (K) orthogonal à l'axe de direction (L), le pont de fourche (21) étant monté de manière rotative autour de l'axe de direction (L) et autour de l'axe de basculement (K), le dispositif de découplage (30, 30', 30") étant configuré pour transmettre un mouvement de direction et un couple de direction dans un sens de direction (LR) autour de l'axe de direction (L) entre le pont de guidon (11) et le pont de fourche (21) et pour compenser un mouvement de basculement dans un sens de basculement (KR) autour de l'axe de basculement (K) du pont de fourche (21) par rapport au pont de guidon (11),
le dispositif de direction comprenant en outre un tenon de direction (13) fixé au pont de guidon (11), qui s'étend coaxialement le long de l'axe de direction (L) et qui peut être monté de manière rotative sur un cadre de motocyclette (41) de la motocyclette, de telle sorte que le pont de guidon (11) peut être relié au cadre de motocyclette (41) par le tenon de direction (13) de manière rotative autour de l'axe de direction (L) et de manière fixe par rapport à l'axe de basculement (K), **caractérisé en ce que** le dispositif de direction comprend en outre un palier pivotant (23) avec une bague intérieure (24) et une bague extérieure (25), la bague intérieure (24) du palier pivotant (23) étant agencée ou fixée de manière concentrique par rapport à l'axe de direction (L) sur le tenon de direction (13) ou sur le cadre de motocyclette (41) et la bague extérieure (25) du palier pivotant (23) étant reliée au pont de fourche (21), de telle sorte que le pont de fourche (21) peut être relié au cadre de motocyclette (41) par le palier pivotant (23) de manière rotative autour de l'axe de direction (L) et autour de l'axe de basculement (K).

2. Dispositif de direction selon l'une quelconque des revendications précédentes, le dispositif de découplage comprenant au moins un tenon de transmission (33) et un palier pour transmettre le couple de direction, le tenon de transmission (33) étant fixé sur le pont de guidon (11) de manière excentrée par rapport à l'axe de direction (L) et s'étendant vers le pont de fourche (21) dans le palier du dispositif de découplage (30'), le palier du dispositif de découplage (30') étant reçu dans le pont de fourche (21) et configuré pour compenser le mouvement de basculement du pont de fourche (21) dans le sens de basculement (KR) autour de l'axe de basculement (K) par rapport au tenon de transmission (33) et pour transmettre le mouvement de direction transmissible du pont de guidon (11) au tenon de transmission (33) dans le sens de direction (LR) autour de l'axe de direction (L) du tenon de transmission (33) au pont de fourche (21).

3. Dispositif de direction selon la revendication précédente, le palier du dispositif de découplage (30') étant un palier pivotant (34) et présentant une bague intérieure (35) et une bague extérieure (36), la bague intérieure (35) du palier pivotant (34) étant agencée sur le tenon de transmission (33) et la bague extérieure (35) du palier pivotant (34) étant reliée au pont de fourche (21) et reçue dans celui-ci, de telle sorte que le tenon de transmission (33) est rotatif autour de l'axe de basculement (K) dans le pont de fourche (21) par le palier pivotant (34).

4. Dispositif de direction selon la revendication 2, le palier du dispositif de découplage (30') présentant une douille élastique, la douille élastique du palier étant agencée avec une surface intérieure directement ou indirectement sur le tenon de transmission (33) et une surface extérieure directement ou indirectement sur le pont de fourche (21) et la douille élastique étant reçue dans le pont de fourche (21), de telle sorte que le tenon de transmission (33) est rotatif autour de l'axe de basculement (K) dans le pont de la fourche (21) par une déformation élastique de la douille élastique.

5. Dispositif de direction selon la revendication 1, le dispositif de découplage (30, 30") comprenant au moins un élément de transmission (37) et au moins un palier (38) pour transmettre le couple de direction, l'au moins un élément de transmission (37) étant fixé de manière excentrée par rapport à l'axe de direction (L) sur le pont de guidon (11) et s'étendant au moins en partie orthogonalement à l'axe de direction (L) vers l'au moins un palier (38) et étant relié au palier, l'au moins un palier (38) du dispositif de découplage (30, 30") étant reçu dans le pont de fourche (21) et configuré pour compenser le mouvement de basculement du pont de fourche (21) dans le sens de basculement (KR) autour de l'axe de basculement (K) par rapport à l'élément de transmission (37) et pour transmettre le mouvement de direction transmissible du pont de guidon (11) à l'élément de transmission (37) ainsi que le couple de direction dans le sens de direction (LR) autour de l'axe de direction (L) de l'élément de transmission (37) au pont de fourche (21).

6. Dispositif de direction selon la revendication précédente, le dispositif de découplage (30) étant configuré sous la forme d'un élément de découplage et formant d'un seul tenant l'élément de transmission (37) et le palier (38) pour transmettre le couple de direction, l'élément de découplage étant configuré sous forme rigide autour de l'axe de direction (L) et sous forme élastique autour de l'axe de basculement (K), s'étendant entre le pont de guidon (11) et le pont de fourche (21) et étant fixé à ceux-ci.

7. Dispositif de direction selon l'une quelconque des revendications 5 ou 6 précédentes, l'au moins un élément de transmission (37) étant plat et s'étendant essentiellement dans un plan orthogonal à l'axe de direction (L).

8. Dispositif de direction selon l'une quelconque des revendications 5 à 7 précédentes, l'au moins un élément de transmission (37) étant formé en acier à ressort.

9. Dispositif de direction selon l'une quelconque des revendications 5 à 8 précédentes, le dispositif de découplage (30") présentant deux éléments de transmission (37) espacés le long de l'axe de direction (L), qui sont reliés entre eux et au pont de guidon (11) par un boulon d'espacement (39) essentiellement parallèle à l'axe de direction, l'axe de direction (L) et un axe central du boulon d'espacement étant espacés l'un de l'autre dans un plan central et les éléments de transmission (37) étant reliés entre eux par un élément de liaison agencé de manière décalée par rapport au plan central, l'élément de liaison étant reçu dans le palier (38) et supporté par le palier (38) sur le pont de fourche (21) ou l'élément de liaison étant configuré d'un seul tenant avec le palier (38).

10. Dispositif de direction selon l'une quelconque des revendications précédentes, le dispositif de découplage (30, 30', 30") comprenant au moins un tenon de transmission (27) qui est prévu sur le pont de guidon (11) ou le pont de fourche (21) et qui s'étend du pont de guidon (11) ou du pont de fourche (21) à l'autre respectif dans un évidement prévu sur l'autre respectif, l'évidement présentant une extension longitudinale dans un sens longitudinal qui est orthogonale à l'axe de direction (L) et orthogonale à l'axe de basculement (K), et une extension transversale dans un sens transversal qui est parallèle à l'axe de basculement (K), l'extension longitudinale étant plus grande que l'extension transversale, de telle sorte que le tenon de transmission (27) peut être déplacé dans l'évidement le long du sens longitudinal de l'évidement lors du mouvement de basculement.

11. Dispositif de direction selon la revendication précédente, le tenon de transmission (27) reposant de manière coulissante dans le sens transversal de l'évidement sur une paroi intérieure de l'évidement orientée vers le tenon de transmission (27) ou sur un insert coulissant agencé dans l'évidement.

12. Dispositif de direction selon la revendication précédente, le tenon de transmission (27) et/ou l'insert coulissant étant formés au moins par sections en un matériau thermoplastique.

13. Motocyclette comprenant un dispositif de direction (1) selon l'une quelconque des revendications précédentes ainsi qu'une suspension de roue avant avec deux jambe de fourche (22), un pont de fourche supérieur, un pont de fourche inférieur, un bras longitudinal et une jambe de suspension, le pont de fourche supérieur et le pont de fourche inférieur reliant les jambes de fourche (22) entre elles, le bras longitudinal reliant de manière mobile le pont de fourche inférieur à un cadre de motocyclette (41) de la motocyclette, la jambe de suspension soutenant le bras longitudinal contre le cadre de motocyclette (41) et le pont de fourche supérieur étant le pont de fourche (21) du dispositif de direction (1) par lequel la suspension de roue avant est découplée en basculement d'un guidon de motocyclette (12) de la motocyclette.
